# EUROPÄISCHE PATENTANMELDUNG

(11) **EP 0 758 191 A2**
(43) Veröffentlichungstag der Anmeldung: **12.02.1997**
(21) Anmeldenummer: 96112636.4
(22) Anmeldetag: 05.08.1996
(51) Int. Cl.: H05B 3/66, F27D 11/02

(54) **Deglorofen**

(30) Priorität: 09.08.1995 DE 19529190
(71) Anmelder: ABB K.K., Tokyo 107 (JP)
(72) Erfinder: Jansen, Helge, Dr., 37130 Gleichen-Reinhausen (DE)
(74) Vertreter: Rupprecht, Klaus, Dipl.-Ing.

(57) **Zusammenfassung**

Die Erfindung bezieht sich auf einen Deglorofen (10), der elektrisch beheizt wird. Die bekannten Einrichtungen dieser Art sind mit Heizstäben (2) ausgerüstet, die von außen senkrecht durch die Decke (11) des Deglorofens in das Innere geführt sind. Durch diese Anordnung geht in dem Deglorofen (10) viel Platz verloren. Bei dem erfindungsgemäßen Deglorofen (10) sind Heizmodule (1) in die Decke (11) des Deglorofens (10) integriert. Jeder Heizmodul (1) weist einen U-förmigen Heizstab (2) auf, der auf einem isolierenden Träger (3) befestigt und dessen Längsachse parallel zur Decke (11) verläuft. Zur Halterung der Heizmodule (1) ist die Decke (11) mit wenigstens einer Haltevorrichtung (8) versehen, in welche die Heizmodule (1) eingesetzt werden können. Die Heizmodule (1) sind aus solchen Werkstoffen gefertigt und weisen solche Abmessungen auf, daß sie im Bereich der Haltevorrichtung (8) die Decke (11) des Deglorofens (11) voll ersetzen.

## Beschreibung

Die Erfindung bezieht sich auf einen Deglorofen gemäß dem Oberbegriff des Patentanspruches 1.

Degloröfen sind für die Verglasung von Asche aus Müllverbrennungsanlagen vorgesehen. In der Asche enthaltene Verunreinigungen werden verdampft und abgetrennt. Die verglasten Bestandteile können als Baumaterialien verwendet oder deponiert werden. Degloröfen arbeiten bei Temperaturen zwischen 1300°C und 1500°C. Zu diesem Zweck ist jeder Deglorofen in seinem Deckenbereich mit elektrischen Heizelementen versehen. Die bis jetzt bekannten Heizelemente sind nach außen hin von einem Schutzrohr aus Keramik umgeben, das an einem Ende dauerhaft geschlossen und am zweiten Ende einen lösbaren Verschluß aufweist.

Aus der deutschen Patentanmeldung P 4328718.2 ist ein Deglorofen bekannt, bei dem das keramische Schutzrohr an seinem offenen Ende einen Flansch auf, der durch eine Schelle aus Metall gebildet wird. Die Schelle ist mittels einer oder mehrerer Schrauben an der Außenfläche des Schutzrohres befestigt. Innerhalb des Schutzrohres ist ein U-förmiger Heizstab angeordnet. Seine elektrischen Anschlüssen sind durch den lösbaren Verschluß hindurch nach außen geführt. Das Schutzrohr ist über eine Öffnung in der Decke in den Innenraum des Deglorofens geführt. Da die Schutzrohre mit den Heizstäben senkrecht zur Decke angeordnet sind, wird hierfür viel Platz benötigt, der dem Deglorofen verloren geht. Bei dieser Anordnung der Heizung strahlen die Heizstäbe zudem parallel zur aufzuheizenden Oberfläche, wodurch sich Energieverluste durch Strahlung direkt in die Wände des Deglorofens ergeben.

Der Erfindung liegt die Aufgabe zugrunde, einen Deglorofen aufzuzeigen, bei dem die oben beschriebenen Nachteile beseitigt sind.

Diese Aufgabe wird erfindungsgemäß durch die Merkmale des Patentanspruches 1 gelöst.

Der erfindungsgemäße Heizmodul ist mit einem U-förmigen, elektrischen Heizstab ausgerüstet, der auf einem Träger befestigt und von einer Schutzplatte überdeckt wird. Der Heizstab wird elektrisch betrieben. Der Träger ist als quaderförmiges Bauelement mit definierten Abmessungen ausgebildet. Er ist aus einem wärmedämmenden und elektrisch nichtleitenden Werkstoff vorzugsweise aus vakuumgeformten Al₂0₃- oder Mullitfaserboards hergestellt. Die elektrischen Anschlußelemente des U-förmigen Heizstabes sind durch Bohrungen zur zweiten Oberfläche des Trägers geführt, und stehen über diese nach außen über. Zur Beheizung eines Deglorofens werden mehrere Heizmodule in die Decke des Deglorofens integriert. Zur Halterung der Heizmodule ist eine Haltevorrichtung in Form eines Rahmens in die Decke eingebaut. Der Rahmen ist zum Inneren des Deglorofens und nach außen hin offen. Die innere Begrenzung des Rahmens liegt in einer Ebene mit der Innenseite der Decke. Der Rahmen ist ebenfalls aus einem gasdichten Werkstoff gefertigt. Die Heizmodule werden so auf den Rahmen gesetzt, daß die Schutzplatten zum Inneren des Deglorofens hinweisen, während die elektrischen Anschlußelemente nach außen gerichtet sind. Die Höhe der Heizmodule ist so gewählt, daß die zweite Oberfläche eines jeden Trägers, in einer Ebene mit der Oberfläche der Decke liegt. Um eine vollständige Abdichtung des Deglorofens nach außen sicherzustellen, ist zwischen jeweils zwei benachbarten Heizmodulen ein gasdichte Trennwand angeordnet, die aus einer porenfreien Keramik hergestellt ist.

Weitere erfindungswesentliche Merkmale sind in den Unteransprüchen gekennzeichnet.

Die Erfindung wird nachfolgend anhand schematischen Zeichnungen näher erläutert.

Es zeigen:
- Fig. 1: einen erfindungsgemäßen Heizmodul,
- Fig. 2: einen Teilbereich des in Fig.1 gezeigten Heizmoduls,
- Fig. 3: einen in die Decke eines Deglorofens integrierten Heizmodul,
- Fig. 4: eine weitere Ansicht des in Fig. 3 gezeigten Deckenbereichs.

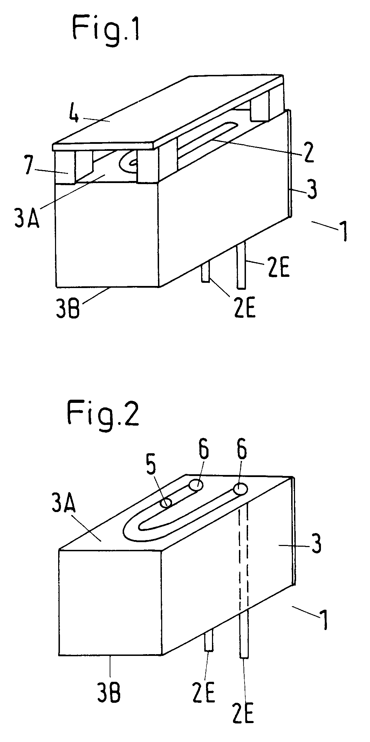

Der in Fig. 1 dargestellte Heizmodul 1 wird im wesentlichen aus einem U-förmigen Heizstab 2, einem Träger 3 und einer Schutzplatte 4 gebildet. Der U-förmige Heizstab 2 wird elektrisch betrieben. Er ist auf der ersten Oberfläche 3A des Trägers 3 installiert. Der Träger 3 ist als quaderförmiges Bauelement mit definierten Abmessungen ausgebildet. Bei der hier dargestellten Ausführungsform weist der Träger 3 eine Länge von 800mm, eine Breite von 150mm und eine Höhe von 100mm auf. Er ist aus einem wärmedämmenden und elektrisch nichtleitenden Werkstoff gefertigt. Der Träger 3 wird vorzugsweise aus vakuumgeformten Al₂0₃- oder Mullitfaserboards hergestellt. Der Heizstab 2 wird mittig auf der Oberfläche 3A des Trägers 3 so installiert, daß die Längsachse seines U-förmigen Bereiches parallel zur Längsachse des Trägers 3 angeordnet ist. Die Länge des U-förmigen Heizstabes 2 ist so gewählt, daß sie geringfügig kürzer ist als die Länge des Trägers 3. Vorzugsweise beträgt sie bei dem hier dargestellten Ausführungsbeispiel 500mm. Wie Fig. 2 zeigt, wird der U-förmige Heizstab 2 mittels zwei oder mehreren Befestigungselementen 5 auf der Oberfläche 3A des Trägers 3 gehalten. Die Befestigungselemente 5 sind aus einem korrosionsbeständigen Werkstoff gefertigt. Das erste Ende einen jeden Befestigungselements 5 ist in dem Träger 3 verankert, während das zweite Ende ähnlich einer Klammer um den U-förmigen Heizstab 2 gelegt ist. Vorzugsweise werden die Befestigungselemente 5 als Bestandteil des Trägers 3 ausgebildet. Die elektrischen Anschlußelemente 2E des U-förmigen Heizstabes 2 sind durch Bohrungen 6 zur zweiten Oberfläche 3B des Trägers 3 geführt, und stehen, wie die Figuren 1 und 2 zeigen, über diese nach außen über. Wie Fig. 1 zeigt, ist in definiertem Abstand über dem U-förmigen Heizstab 2 die Schutzplatte 4 angeordnet. Die Abmessungen der Schutzplatte 4 sind an die Größe der Oberfläche 3A des Trägers 3 angepaßt. Die Schutzplatte 4 ist so angeordnet, daß sie die Oberfläche 3A des Trägers 3 vollständig überdeckt. Zur Halterung der Schutzplatte 4 ist bei dem hier dargestellten Ausführungsbeispiel an jeder Ecke der Oberfläche 3A des Trägers 3 ein Distanzstück 7 angeordnet und mit dem Träger 3 dauerhaft verbunden. Die Distanzstücke 7 sind ebenso wie die Schutzplatte 4 aus einem gasdichten, die Wärme gut leitenden Werkstoff gefertigt. Vorzugsweise werden sie aus Al₂O₃, einem Spinell oder aus MgO₂ gefertigt. Die Abmessungen der Distanzstücke 7 sind so gewählt, daß der Abstand zwischen dem U-förmigen Heizstab 2 und der Schutzplatte 4 etwa 10mm beträgt.

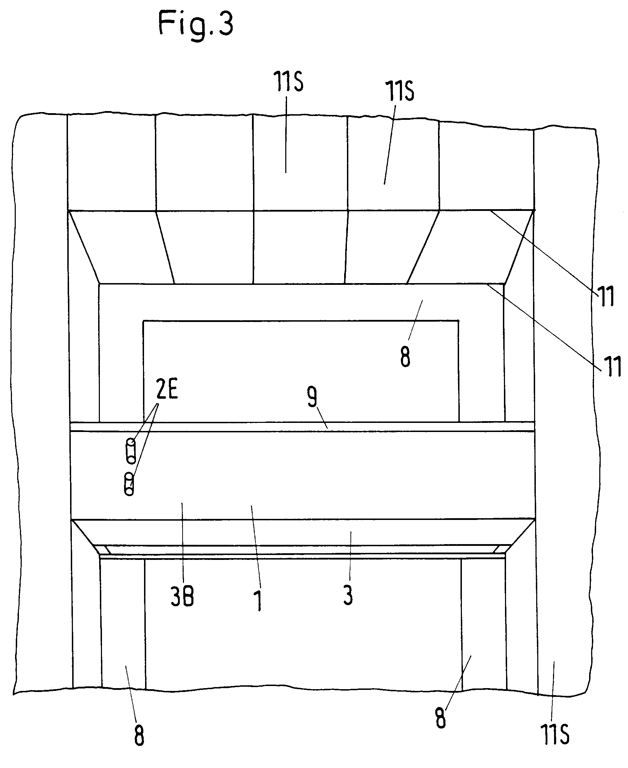

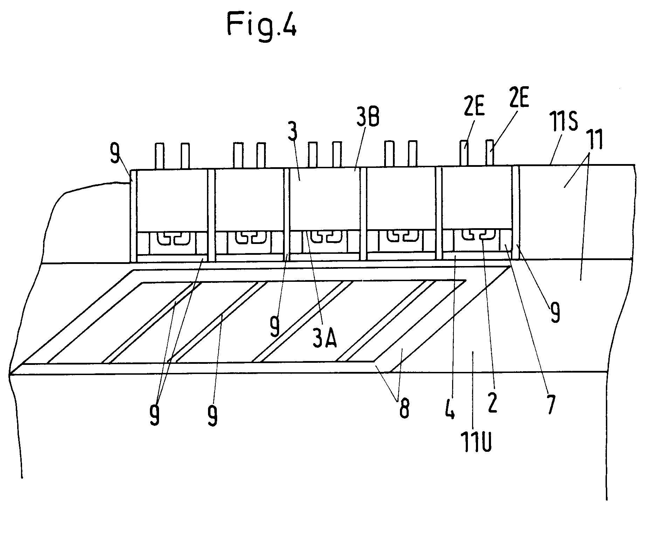

Zum Beheizen eines Deglorofens 10, der in den Fig. 3 und 4 bereichsweise dargestellt ist, werden mehrere der in den Fig. 1 und 2 dargestellten und in den zugehörigen Beschreibungen erläuteren Heizmodule 1 in die Decke 11 des Deglorofens 10 integriert. Diese Heizmodule 1 werden gegennüber den in den Fig. 1 und 3 gezeigten Darstellungen um 180° gedreht, bevor sie in die Decke 11 eingebaut. Die Decke 11 besteht aus Steinen 11S, die aus dem gleichen Werkstoff wie die Träger 3 gefertigt sind. Zur Halterung der Heizmodule 1 ist, wie an Hand der Fig. 3 und 4 zu sehen ist, eine Haltevorrichtung 8 in Form eines Rahmens in die Decke 11 eingebaut. Der Rahmen 8 ist zum Inneren des Deglorofens 10 hin offen. Seine zum Inneren des Deglorofens 10 weisende Begrenzung liegt in einer Ebene mit der Innenseite 11U der Decke 11. Der Rahmen 8 ist ebenfalls aus einem gasdichten Werkstoff gefertigt. Die Heizmodule 1 werden so auf den Rahmen 8 gesetzt, daß die Schutzplatten 4 zum Inneren des Deglorofens 10 hinweisen, während die elektrischen Anschlußelemente 2E nach außen weisen. Die Heizmodule 1 werden nur durch ihr Gewicht auf dem Rahmen 8 gehalten, weitere Befestigungselemente sind nicht erforderlich. Wie an Hand von Fig 4 zu sehen ist, ist die Höhe der Heizmodule 1 so gewählt, daß die zweite Oberfläche 3B eines jeden Trägers 3, in einer Ebene mit der Oberfläche der Decke 11 liegt. Um eine vollständige Abdichtung des Deglorofens 10 nach außen zu erreichen, ist zwischen jeweils zwei benachbarten Heizmodulen 1 ein gasdichte Trennwand 9 angeordnet, die aus einer porenfreien, die Wärme leitenden Keramik hergestellt wird. Ebensolche Trennwände 9 sind zwischen den Steinen 11S der Decke 11 und den unmittelbar angrenzenden Heizmodulen 1 angeordnet. Mit Hilfe dieser Trennwand 9 wird verhindert, daß Gase aus dem Deglorofen 10 nach außen gelangen können.

## Patentansprüche

1. Deglorofen mit einer an der Decke (11) befestigten elektrischen Heizung (2), **dadurch gekennzeichnet, daß** zum Heizen wenig ein in die Decke (11) integrierter Heizmodul (1) vorgesehen ist.

2. Deglorofen nach Anspruch 1, dadurch gekennzeichnet, daß das jeder Heizmodul (1) einen U-förmigen Heizstab (2) aufweist, der auf der ersten Oberfläche (3A) eines Trägers (3) befestigt ist, und daß die beiden elektrischen Anschlußelemente (2E) des U-förmigen Heizstabes (2) durch den Träger (3) hindurch zur zweiten Oberfläche (2B) des Trägers (3) geführt sind.

3. Deglorofen nach einem der Ansprüche 1 oder 2, dadurch gekennzeichnet, daß der Träger (3) als quaderförmiges Bauelement mit definierten Abmessungen ausgebildet und aus einem wärmedämmenden und elektrisch nichtleitenden Werkstoff gefertigt ist.

4. Deglorofen nach einem der Ansprüche 1 bis 3, dadurch gekennzeichnet, daß der Träger () aus vakuumgeformten Al₂O₃- oder Mulittfaserboards oder einem feuerfesten Stein hergestellt ist.

5. Deglorofen nach einem der Ansprüche 1 bis 4, dadurch gekennzeichnet, daß in definiertem Abstand über der ersten Oberfläche (2A) des Trägers (3) eine den U-förmigen Heizstab (2) vor Korrosion schützende Schutzplatte (4) angeordnet ist, welche die gleiche Größe wie die Oberfläche (3A) aufweist, und über ein oder mehrere Distanzstücke (7) an der ersten Oberfläche (3A) befestigt ist.

6. Deglorofen nach einem der Ansprüche 1 bis 5, dadurch gekennzeichnet, daß in die Decke (11) wenigstens eine nach außen und innen offene Haltevorrichtung (8) in From eines Rahmens zur Aufnahme der Heizmodule (1) eingebaut ist, daß der Rahmen (8) aus einem gasdichten Werkstoff gefertigt ist, daß zwischen jeweils zwei in der Haltevorrichtung (8) aneinandergrenzenden Heizmodulen (1) sowie zwischen der Decke (11) und dem jeweils direkt angrenzenden Heizmodul (1) eine gasdichte Trennwand (9) angeordnet ist, daß die Decke (11) im Bereich der Haltevorrichtung (8) durch den Rahmen, die Heizmodule (1) und die gasdichten Trennwände (9) gebildet ist.

7. Deglorofen nach einem der Ansprüche 1 bis 6, dadurch gekennzeichnet, daß die Heizmodule (1) so in die Haltevorrichtung (8) gesetzt sind, daß die Schutzplatten (4) der Heizmodule (1) die innere Begrenzung der Decke (11) bilden und in einer Ebene mit der Übrigen Innenfläche (11U) der Decke (11) liegen, und daß die zweiten Oberflächen (2B) der Träger (3) die nach außen weisende Begrenzung der Decke (11) bilden, die in einer Ebene mit der übrigen Oberfläche (11S) der Decke (11) liegen.
